# EUROPÄISCHE PATENTSCHRIFT

(11) **EP 2 252 653 B1**
(45) Veröffentlichungstag und Bekanntmachung des Hinweises auf die Patenterteilung: **12.05.2021**
(21) Anmeldenummer: 09717273.8
(22) Anmeldetag: 25.02.2009
(51) Int. Cl.: C08K 5/00, C08K 5/5313, C09K 21/12, C08K 3/10, C08K 5/098

(54) **VERFAHREN ZUR HERSTELLUNG FLAMMWIDRIGER, NICHT KORROSIVER UND GUT FLIESSFÄHIGER POLYAMID- UND POLYESTERFORMMASSEN**
METHOD FOR THE PRODUCTION OF A FLAME-RETARDANT, NON-CORROSIVE, AND EASILY FLOWABLE POLYAMIDE AND POLYESTER MOLDING COMPOUNDS
PROCÉDÉ DE FABRICATION DE MÉLANGES À MOULER DE POLYAMIDE ET DE POLYESTER, RETARDATEURS DE FLAMME, NON CORROSIFS ET AYANT DE BONNES PROPRIÉTÉS D'ÉCOULEMENT

(30) Priorität: 03.03.2008 DE 102008012225; 23.05.2008 DE 102008024752; 26.08.2008 DE 102008039659
(43) Veröffentlichungstag der Anmeldung: 24.11.2010
(60) Teilanmeldung: 20152452.7
(73) Patentinhaber: Clariant International Ltd, 4132 Muttenz (CH)
(72) Erfinder: HOEROLD, Sebastian, 86420 Diedorf (DE); SCHACKER, Ottmar, 86368 Gersthofen (DE); BAUER, Harald, 50170 Kerpen (DE); KRAUSE, Werner, 50354 Huerth (DE); EISENHAUER, Daniela, 50969 Köln (DE)
(74) Vertreter: Mikulecky, Klaus
(86) Internationale Anmeldenummer: PCT/EP2009/001319
(87) Internationale Veröffentlichungsnummer: WO 2009/109318

(56) Entgegenhaltungen:
- EP-A- 1 024 167
- WO-A-2004/090036
- WO-A-2005/033192
- WO-A-2007/048509
- DATABASE WPI Week 200723 Thomson Scientific, London, GB; AN 2007-226411 XP002531187 & JP 2007 023206 A (ASAHI KASEI KK) 1. Februar 2007 (2007-02-01)

## Beschreibung

Die vorliegende Erfindung betrifft ein Verfahren zur Herstellung flammwidriger, nicht korrosiver und gut fließfähiger Polyamid- und Polyesterformmassen sowie diese Massen selbst.

Salze von Phosphinsäuren (Phosphinate) haben sich als wirksame flammhemmende Zusätze für thermoplastische Polymere erwiesen (DE-A-2 252 258 und DE-A-2 447 727). Calcium- und Aluminiumphosphinate sind in Polyestern als besonders effektiv beschrieben worden und beeinträchtigen die Materialeigenschaften der Polymerformmassen weniger als beispielsweise die Alkalimetallsalze (EP-A-0 699 708).

In der DE-A-196 07 635 werden Calcium- und Aluminiumphosphinate als besonders effektive Flammschutzmittel für Polyamide beschrieben. Unter Polyamiden werden Polymere verstanden, die über eine Amidgruppe wiederkehrende Einheiten in der Polymerkette enthalten. Als besonders geeignete Polyamide werden Polyamid 6 und Polyamid 66 genannt. Daraus hergestellte Formmassen erreichen nach UL94 die Brandklasse V0 bei einer Probekörperdicke von 1,2 mm.

Darüber hinaus wurden synergistische Kombinationen von Phosphinaten mit verschiedenen stickstoffhaltigen Verbindungen gefunden, die in einer ganzen Reihe von Polymeren als Flammschutzmittel effektiver wirken, als die Phosphinate allein (WO 1997/039053, DE-A-197 34 437, DE-A-197 37 727 und US 6,255,371B1).

Unter anderem wurden Melamin und Melaminverbindungen als wirksame Synergisten beschrieben, beispielsweise Melamincyanurat und Melaminphosphat, die selbst auch eine gewisse Flammschutzwirkung in bestimmten Thermoplasten haben, in Kombination mit Phosphinaten aber deutlich wirksamer sind.

Auch höhermolekulare Derivate des Melamins wie die Kondensationsprodukte Melam, Melem und Melon sowie entsprechende Umsetzungsprodukte dieser Verbindungen mit Phosphorsäure wie Dimelaminpyrophosphat und Melaminpolyphosphate sind als Flammschutzmittel beschrieben worden und als Synergisten zu Phosphinaten wirksam.

Die DE-A-103 16 873 beschreibt flammgeschützte Polyamidformmassen, bestehend aus 30 - 80 Gew.-% eines teilaromatischen, teilkristallinen Polyamids und 1 - 30 Gew.-% eines Phosphinsäure- oder Diphosphinsäuresalzes als Flammschutzmittel. In teilaromatischen Polyamiden wird eine bessere Wirksamkeit der Phosphinsäuresalze beschrieben als in aliphatischen Polamider

Die JP 2007 023206 A offenbart flammgeschützte und fließfähige Polyamidzusammensetzungen enthaltend ein Phosphinsäuresalz und weitere Additive.

Nachteilig bei den beschriebenen Zusätzen von Flammschutzmitteln ist ein stärkerer Verschleiß von Metallteilen der Plastifiziereinheit und der Düse beim Compoundieren bzw. Spritzgießen von Polyester oder Hochtemperatur-Polyamid Compounds mit bestimmten Phosphinaten.

Generell führen harte Füllstoffe (wie z. B. Glasfasern) zusammen mit korrosiven Spaltprodukten (etwa von Flammschutzmitteln) zu Verschleiß an metallischen Oberflächen von Werkzeugen. Dies macht je nach Materialqualität der metallischen Oberflächen und der verwendeten Kunststoffe ein häufigeres Wechseln von Heizmantel der Fördereinheit, der Förderschnecke sowie der Spritzgusswerkzeuge erforderlich. Da glasfaserverstärkte thermoplastische Polymere abrasiv sind werden den Möglichkeiten des Korrosionsschutzes der Schnecken Grenzen gesetzt, da sehr korrosionsbeständige Stähle nicht die erforderliche Härte für die Verarbeitung glasfaserverstärkter Polymere aufweisen. Korrosion ist laut DIN EN ISO 8044 die physikochemische Wechselwirkung zwischen einem Metall und seiner Umgebung, als Folge derer es zu einer Veränderung der Eigenschaften des Metalls und damit zur erheblichen Beeinträchtigung der Funktion des Metalls, der Umgebung oder des technischen Systems, von dem dieses einen Teil bildet, kommen kann.

Da man wegen der Miniaturisierung, insbesondere in der Elektronik-Industrie, sehr dünnwandige Komponenten herstellt, wird für die dafür eingesetzten Formmassen eine Brandklassierung gemäß UL94 von V0 bei 0,4 mm gefordert. Darüber hinaus ist eine gute Fließfähigkeit der Polyamide für dünnwandige Anwendungen wichtig.

Nachteilig ist bei den beschriebenen Zusätzen von Flammschutzmitteln weiterhin der Rückgang der Fließfähigkeit im Vergleich zum nicht flammgeschützten Polyamid durch den Anteil an nicht schmelzenden Feststoffen.

Es war daher Aufgabe der vorliegenden Erfindung ein Verfahren zur Herstellung flammgeschützter Polyamide und Polyester zur Verfügung zu stellen, die mit halogenfreiem Flammschutz UL 94 V-0 bei 0,4 mm Wandstärke erreichen, in ihrem Materialverschleiß ähnliche Werte wie nicht flammgeschützte Polymere erreichen und eine gute Fließfähigkeit sowie Migrationsfestigkeit aufweisen.

Es wurde nun überraschend gefunden, das Mischungen aus Phosphinaten der Metalle Al, Mg, Ca, Ti, Zn oder Na mit bestimmten Metallseifen und Metallsalzen in Polyestern und Polyamiden einschließlich teilaromatischen Hochtemperaturpolyamiden wirksame Flammschutzmittel darstellen und zudem deutlich geringerer Materialverschleiß und höhere Fließfähigkeiten erreicht werden können als bei Verwendung der Phosphinate der Metalle allein. Es wurde weiterhin überraschend gefunden, dass die hohe Wärmeformbeständigkeit der Polymere, insbesondere der Polyamide nach Zusatz der Phosphinate der vorgenannten Metalle mit Metallseifen und Metallsalzen weitgehend erhalten bleibt und die Phosphinate/Polymer-Mischungen bei hohen Temperaturen verarbeitet werden können, ohne das es zu Polymerabbau oder Verfärbungen kommt.

Wegen ihrer Formbeständigkeit bei hohen Temperaturen und des günstigen Brandverhaltens eignen sich diese Polymere, insbesondere die Hochtemperatur
- Polyamide sehr gut zur Herstellung von dünnwandigen Formkörpern für die Elektro- und Elektronik-Industrie.

Die Erfindung betrifft daher ein Verfahren zur Herstellung flammwidriger, nicht korrosiver, gut fließfähiger Polyamide und Polyester, dadurch gekennzeichnet, dass eine Flammschutzmittelmischung aus einem Phosphinsäuresalz der Formel (I) mit M = Al, Mg, Ca, Ti, Zn oder Na (Komponente A) 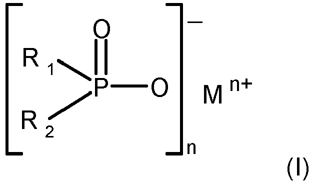 worin
- R¹, R²: gleich oder verschieden sind und C₁-C₆-Alkyl, linear oder verzweigt und/oder Aryl;
- n: 1 bis 3;
bedeuten, und als Komponente B Natriumphosphit, Bariumsulfat und/oder Zinkcarbonat eingesetzt wird, wobei Komponente A in 70 - 99,5 Gew.-% und Komponente B in 0,5 - 30 Gew.-% in der Flammschutzmittelmischung enthalten ist.

Bevorzugt sind Komponente A in 95 - 99,5 Gew.-% und die Komponente B in 0,5 - 5 Gew.-% enthalten.

Bei Komponente B handelt es sich um Natriumphosphit, Bariumsulfat und/oder um Zinkcarbonat.

Bevorzugt sind R¹, R² gleich oder verschieden und bedeuten Methyl, Ethyl, n-Propyl, iso-Propyl, n-Butyl, tert.-Butyl, n-Pentyl und/oder Phenyl.

Bevorzugt handelt es sich bei den Polyamiden um aliphatische oder teilaromatische Polyamide.

Bevorzugt handelt es sich um Polyamide, die als aromatische Diamine Phenylendiamine oder Xylylendiamine enthalten.

Bevorzugt handelt es sich um Polyamide, die als aromatische Dicarbonsäuren Terephthalsäure oder Isophthalsäure enthalten.

Bevorzugt wird beim erfindungsgemäßen Verfahren als weitere Komponente C eine Stickstoff-, Phosphor- oder Phosphorstickstoffverbindung eingebracht.

Bevorzugt handelt es sich bei der Komponente C um Melaminphosphat, Dimelaminphosphat, Melaminpyrophosphat, Melaminpolyphosphate, Melampolyphosphate, Melempolyphosphate und/oder Melonpolyphosphate und/oder um Melaminkondensationsprodukte wie Melam, Melem und/oder Melon.

Bevorzugt handelt es sich bei der Komponente C auch um oligomere Ester des Tris(hydroxyethyl)isocyanurats mit aromatischen Polycarbonsäuren, Benzoguanamin, Tris(hydroxyethyl)isocyanurat, Allantoin, Glycouril, Melamin, Melamincyanurat, Dicyandiamid, Guanidin und/oder Carbodiimide handelt.

Bevorzugt handelt es sich bei den Polyestern um Polyethylenterephthalat oder Polybutylenterephthalat.

Die Erfindung betrifft auch ein Verfahren zur Herstellung flammwidriger, nicht korrosiver, gut fließfähiger Polyamide und Polyester und auch Formmassen daraus, dadurch gekennzeichnet, dass die flammhemmenden Komponenten A und B sowie gegebenenfalls C in die Polyamide eingearbeitet werden, indem alle Bestandteile als Pulver und/oder Granulat in einem Mischer vorgemischt und anschließend in einem Compoundieraggregat in der Polymerschmelze homogenisiert werden und danach die erhaltenen Schmelze als Strang abgezogen, gekühlt und granuliert wird.

Die Erfindung betrifft auch ein Verfahren zur Herstellung flammwidriger, nicht korrosiver, gut fließfähiger Polyamide und Polyester und auch Formmassen daraus, dadurch gekennzeichnet, dass die flammhemmenden Komponenten A und B sowie gegebenenfalls C in die Polyamide eingearbeitet werden, indem alle Bestandteile als Pulver und/oder Granulat jeweils separat über eine Dosieranlage direkt in das Compoundieraggregat eingebracht werden.

DIe Erfindung betrifft auch ein Verfahren zur Herstellung flammwidriger, nicht korrosiver, gut fließfähiger Polyamide und Polyester und auch Formmassen daraus, dadurch gekennzeichnet, dass die flammhemmenden Komponenten A und B sowie gegebenenfalls C in die Polyamide eingearbeitet werden, indem alle Bestandteile einem fertigen Polymergranulat bzw. -pulver beigemischt werden und die Mischung direkt auf einer Spritzgussmaschine zu Formteilen zu verarbeitet wird.

Bevorzugt enthalten die Polymere 5-60 Gew.-% an faser- oder teilchenförmigen Füllstoffen oder deren Mischungen

Die Erfindung betrifft schließlich auch die Verwendung von Flammschutzmittelmischungen aus mindestens einem Phosphinsäuresalz der Formel (I) mit M = Al, Mg, Ca, Ti, Zn, Na (Komponente A) 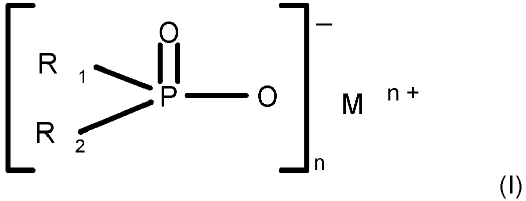 worin
- R¹, R²: gleich oder verschieden sind und C₁-C₆-Alkyl, linear oder verzweigt und/oder Aryl;
- n: 1 bis 3;
bedeuten und mindestens einer Komponente B, wobei es sich dabei um Natriumphosphit, Bariumsulfat und/oder Zinkcarbonat handelt und wobei Komponente A in 70 - 99,5 Gew.-% und Komponente B in 0,5 - 30 Gew.-% in der Flammschutzmittelmischung enthalten ist, zur Inhibierung der Korrosion bei der Herstellung von Polyamiden und Polyestern.

Bevorzugt handelt es sich hierbei um gut fließfähige Polyamide und Polyester.

Bevorzugt wird bei der erfindungsgemäßen Verwendung die Korrosion von Metallteilen der Plastifiziereinheit und/oder der Düse beim Compoundieren bzw. Spritzgießen von Polyester und/oder Polyamiden und/oder Compounds davon inhibiert.

Die Erfindung umfasst auch nichtkorrosive Polyamid- und Polyester -Formmassen enthaltend 0,05 bis 30 Gew.-% einer Flammschutzmittelmischung aus einem Phosphinsäuresalz der Formel (I) mit M = Al, Mg, Ca, Ti, Zn, Na (Komponente A) 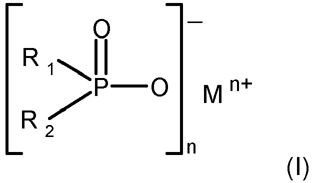 worin
- R¹, R²: gleich oder verschieden sind und C₁-C₆-Alkyl, linear oder verzweigt und/oder Aryl;
- n: 1 bis 3;
bedeuten, und als Komponente B Natriumphosphit, Bariumsulfat und/oder Zinkcarbonat, wobei Komponente A in 70 - 99,5 Gew.-% und Komponente B in 0,5 - 30 Gew.-% in der Flammschutzmittelmischung enthalten ist und 99,95 bis 70 Gew.-% Polyamid- und/oder Polyester.

Die so hergestellten Polyamide und Polyester sind hochgradig migrationsfest. Weitere geeignete Antikorrosionsmittel sind z. B. Benzotriazole, (Amino)phosphonat, Siloxan, Benzoat, und Sebacat.

Bevorzugt handelt es sich bei den Polymeren im Falle von Polyamiden um solche vom Aminosäure-Typ und/oder vom Diamin-Dicarbonsäure-Typ.

Bevorzugt handelt es sich bei den Polyamiden um Polyamid 6, Polyamid 12, teilaromatische Polyamide und/oder Polyamid 66. Bevorzugt handelt es sich dabei um teilkristalline Polyamide.

Als erfindungsgemäß geeignete teilaromatische, teilkristalline Polyamide können entweder Homopolyamide oder Copolyamide eingesetzt werden, deren wiederkehrende Einheiten aus Dicarbonsäuren und Diaminen sowie aus Aminocarbonsäuren bzw. der entsprechenden Lactame abgeleitet sind. Geeignete Dicarbonsäuren sind aromatische und aliphatische Dicarbonsäuren wie beispielsweise Terephthalsäure, Isophthalsäure, Adipinsäure, Azeiainsäure, Sebazinsäure, Dodekandicarbonsäure und 1,4-Cyclohexandicarbonsäure. Geeignete Diamine sind aliphatische und cycloaliphatische Diamine wie beispielsweise Hexamethylendiamin, Nonamethylendiamin, Dekamethylerdiamin, Dodekarnethylendiamin, 2-Methylpentamethylendiamin, 1,4-Cyclohexandiamin, Di-(4-diaminocyclo-hexyl)-methan, Di-(3-methyl-4-aminocyclohexyl)-methan. Geeignete Aminocarbonsäuren sind Aminocapronsäure und Aminolaurinsäure, die auch in Form der entsprechenden Lactame Caprolactam und Laurinlactam eingesetzt werden können.

Die Schmelzpunkte dieser teilaromatischen Polyamide liegen zwischen 280 und 340°C, bevorzugt zwischen 295 und 325 °C.

Besonders bevorzugt bei den Polyamiden sind solche, die aus Terephtalsäure (TPS), Isophtalsäure (IPS) und Hexamethyldiamin oder aus Terephtalsäure, Adipinsäure und Hexamethyldiamin gebildet worden sind. Als günstige Verhältnisse haben sich dabei ca. 70:30 TPS:IPS bzw. 55:45 TPS:Adipinsäure herausgestellt. Die überlegenen Eigenschaften werden insbesondere durch diese beiden speziellen Polyamide realisiert.

Die Polyester sind ausgewählt aus der Gruppe der Polyalkylenterephthalate. Polyalkylenterephthalate im Sinne der Erfindung sind Reaktionsprodukte aus aromatischen Dicarbonsäuren oder ihren reaktionsfähigen Derivaten (z. B. Dimethylestern oder Anhydriden) und aliphatischen, cycloaliphatischen oder araliphatischen Diolen und Mischungen dieser Reaktionsprodukte.

Erfindungsgemäß bevorzugt einzusetzende Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 FF, Karl-Hanser-Verlag, München 1973).

Besonders bevorzugt handelt es sich um Polyethylenterephthalat oder Polybutylenterephthalat oder Mischungen aus beiden Polyestern.

Besonders bevorzugt als Komponente C sind Melaminpolyphosphat, Melem oder Melamincyanurat.

Copolyamide sind solche Produkte, die aus mehr als einem Polyamid-bildenden Monomeren hergestellt werden. Durch die Auswahl der Monomeren und des Mischungsverhältnisses kann man die Eigenschaften der Polyamide in einem sehr weiten Bereich variieren. Gegenüber den aliphatischen Copolyamiden sind bestimmte Copolyamide mit aromatischen Monomeren interessante technische Produkte. Sie zeichnen sich durch eine höhere Glasübergangstemperatur und durch einen höheren Schmelzpunkt der teilkristallinen Bereiche und damit mit einer für die praktische Verwendung ausreichenden Wärmeformbeständigkeit aus.

So lassen sich ausgehend von Terepththalsäure und/oder Isophthalsäure und Polyaminen wie Hexamethylendiamin teilkristalline Polyamide mit hoher Wärmeformbeständigkeit herstellen.

Erfindungsgemäß geeignete teilaromatische Copolyamide sind beispielsweise in Becker/Braun Kunststoff Handbuch 3/4, Polyamide, herausgegeben von L. Bottenbruch und R. Binsack, Kapitel 6, teilaromatische und aromatische Polyamide, S. 803-845, beschrieben, worauf ausdrücklich Bezug genommen wird.

Erfindungsgemäß geeignete teilaromatische Copolyamide können auch BlockCopolymere der vorgenannten Polyamide mit Polyolefinen, Olefin-Copolymeren, Ionomeren, oder chemisch gebundenen oder gepfropften Elastomeren; oder mit Polyethern, wie z. B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("IM-Polyam idsysteme").

Erfindungsgemäß besonders bevorzugt sind Polyalkylenterephthalate, die allein aus Terephthalsäure und deren reaktionsfähigen Derivaten (z. B. deren Dialkylestern) und Ethylenglykol und/oder Propandiol-1,3 und/oder Butandiol-1,4 hergestellt werden (Polyethylen- , Polytrimethylen- und Polybutylenterephthalat), und Mischungen dieser Polyalkylenterephthalate.

Im Folgenden umfasst der Begriff "Phosphinsäuresalz" Salze der Phosphin- und Diphosphinsäuren und deren Polymere.

Die Phosphinsäuresalze, die in wässrigem Medium hergestellt werden, sind im Wesentlichen monomere Verbindungen. In Abhängigkeit von den Reaktionsbedingungen können unter Umständen auch polymere Phosphinsäuresalze entstehen.

Geeignete Phosphinsäuren als Bestandteil der Phosphinsäuresalze sind beispielsweise:
Dimethylphosphinsäure, Ethyl-methylphosphinsäure, Diethylphosphinsäure, Methyl-n-propyl-phosphinsäure, Dipropylphosphinsäure, Ethyl-Butylphosphinsäure, Dibutylphosphinsäure, Ethyl-Hexylphosphinsäure, Butyl-Hexylphosphinsäure, Methyl-phenyl-phosphinsäure und Diphenylphosphinsäure.

Die Salze der Phosphinsäuren für die vorliegende Erfindung können nach bekannten Methoden hergestellt werden, wie sie beispielsweise in der EP-A-0 699 708 näher beschrieben sind. Die Phosphinsäuren werden dabei beispielsweise in wässriger Lösung mit Metallcarbonaten, Metallhydroxiden oder Metalloxiden umgesetzt.

Die vorgenannten Phosphinsäuresalze können für die erfindungsgemäße Flammschutzmittel-Kombination je nach Art des verwendeten Polymeren und der gewünschten Eigenschaften in verschiedener physikalischer Form eingesetzt werden. So können die Phosphinsäuresalze beispielsweise zur Erzielung einer besseren Dispersion im Polymeren zu einer feinteiligen Form vermahlen werden. Die Phosphinsäuresalze, wie sie gemäß der Erfindung in der Flammschutzmittel-Kombination eingesetzt werden, sind thermisch stabil, zersetzen die Polymeren weder bei der Verarbeitung noch beeinflussen sie den Herstellprozess der Kunststoff-Formmasse. Die Phosphinsäuresalze sind unter den üblichen Herstellungs- und Verarbeitungsbedingungen für thermoplastische Polymere nicht flüchtig.

Die flammhemmenden Komponenten A und B sowie gegebenenfalls C können in die Polyamide eingearbeitet werden, indem etwa alle Bestandteile als Pulver und/oder Granulat in einem Mischer vorgemischt und anschließend in einem Compoundieraggregat (z. B. einem Doppelschneckenextruder) in der Polymerschmelze homogenisiert werden. Die Schmelze wird üblicherweise als Strang abgezogen, gekühlt und granuliert. Die Komponenten A und B sowie gegebenenfalls C können auch separat über eine Dosieranlage direkt in das Compoundieraggregat eingebracht werden.

Es ist ebenso möglich, die flammhemmenden Komponenten A und B sowie gegebenenfalls C einem fertigen Polymergranulat bzw. -pulver beizumischen und die Mischung direkt auf einer Spritzgussmaschine zu Formteilen zu verarbeiten.

Als weitere Komponenten können die erfindungsgemäßen Polymere 5-60 Gew.-% an faser- oder teilchenförmigen Füllstoffen oder deren Mischungen enthalten. Als Beispiele für faserförmige Füllstoffe seien faserförmige Verstärkungsmittel wie Glasfasern, Kohlenstofffasern, Aramidfasern, Kaliumtitanatwhisker genannt, wobei Glasfasern bevorzugt sind. Die Einarbeitung der Glasfasern in die Formmassen kann entweder in Form endloser Stränge (Rovings) oder in geschnittener Form (Kurzglasfasern) erfolgen. Zur Verbesserung der Verträglichkeit mit den teilaromatischen Polyamiden können die verwendeten Glasfasern mit einer Schlichte und einem Haftvermittler ausgerüstet sein. Der Durchmesser der üblicherweise verwendeten Glasfaser liegt im Bereich von 6 bis 20 µm.

Als teilchenförmige Füllstoffe eignen sich unter anderen Glaskugeln, Kreide, gepulverter Quarz, Talkum, Wollastonit, Kaolin, Glimmer. Übliche Additive sind beispielsweise Wärmeschutzmittel, Antioxidantien, Lichtschutzmittel, Gleitmittel, Entformungsmittel, Nukleierungsmittel, Pigmente, Farbstoffe, Antidripping-Mittel.

Die erfindungsgemäßen flammwidrigen, nicht korrosiven Polyamide und Polyester eignen sich zur Herstellung von Formkörpern, Filmen, Fäden und Fasern, beispielsweise durch Spritzgießen, Extrudieren oder Verpressen.

Der Brandschutz elektrischer und elektronischer Ausrüstungen ist in Vorschriften und Normen zur Produktsicherheit festgelegt. In den USA werden brandschutztechnische Prüf- und Zulassungsverfahren von Underwriters Laboratories (UL) durchgeführt. Die UL Vorschriften werden heute weltweit akzeptiert. Die Brandprüfungen für Kunststoffe wurden entwickelt, um den Widerstand der Materialien gegenüber Entzündung und Flammenausbreitung zu ermitteln.

Je nach Brandschutzanforderungen müssen die Materialien horizontale Brenntests (Klasse UL 94 HB oder die strengeren vertikalen Tests (UL 94 V2, V1 oder V-O) bestehen. Diese Prüfungen simulieren Zündquellen geringer Energie, die in Elektrogeräten auftreten und auf Kunststoffteile elektrischer Baugruppen einwirken können.

### Beispiele

### 1. Eingesetzte Komponenten

### Handelsübliche Polymere (Granulate):

Polyamid 6.6: Ultramid® A 3 (Fa. BASF AG, D)
PBT: Ultradur 4500 (Fa. BASF, D)

### Teilaromatische Polyamide:

Polyamid 6T/66: Zytel® HTN FE 8200 (Fa. DuPont, USA): Polyamid aus Terephthalsäure, Diaminohexan, 2-Methyldiaminopentan
Glasfasern: Vetrotex EC 10 983, Fa. Vetrotex, Frankreich, für Polyamide
Glasfasern: Vetrotex EC 10 952, Fa. Vetrotex, Frankreich, für PBT

### Flammschutzmittelkomponenten (pulverförmig):

Aluminiumsalz der Diethylphosphinsäure, im Folgenden als DEPAL bezeichnet
Zinksalz der Diethylphosphinsäure, im Folgenden als DEPZN bezeichnet, Schmelzpunkt 200 °C
Böhmit: Apyral® AOH 60, Fa. Nabaltec, D
Natriumphosphit Brüggolen H10, Brüggemann, D
Natriumhypophosphit, Vopelius, D
Zinkstannat Flametard S, William Blythe, GB
Zinkborat: Firebrake® 500, Borax, USA
Zinkcarbonat AC, Brüggemann, D
Melaminpolyphosphat, im Folgenden als MPP bezeichnet, Melapur® 200, Ciba SC, Schweiz
Melamincyanurat, im Folgenden als MC bezeichnet, Melapur® MC 50, Ciba SC, Schweiz

### Salze organischer Säuren:

Calciumsterat, Natriumstearat, Magnesiumstearat, Zinkstearat, Bariumstearat, Aluminiumstearat, Peter Greven Fettchemie, D
Calciummonatant Licomont CaV102
Natriummontanat Licomont NaV101
Clariant Produkte (Deutschland) GmbH, D

### 2. Herstellung, Verarbeitung und Prüfung von flammhemmenden Kunststoff-Formmassen

Die Polymere wurden auf einem Doppelschnecken-Extruder (Typ Leistritz ZSE 25/44) bei Temperaturen von 250 bis 275 °C (PBT GV), 260 bis 280 °C (PA 6.6-GV) bzw. von 300 bis 320 °C (teilaromatische Polyamide) verarbeitet. Der homogenisierte Polymerstrang wurde abgezogen, im Wasserbad gekühlt und anschließend granuliert.
Die Flammschutzmittelkomponenten wurden in dem in den Tabellen angegebenen Verhältnis vermischt und über einen Seiteneinzug der Polymerschmelze zugegeben. Die Glasfasern wurden ebenfalls über einen Seiteneinzug zugegeben.

Nach ausreichender Trocknung wurden die Formmassen auf einer Spritzgießmaschine (Typ Arburg 320 C Allrounder) zu Prüfkörpern verarbeitet und anhand des UL 94-Tests (Underwriter Laboratories) und der Glühdrahtprüfung nach IEC 60695-2 auf Flammwidrigkeit geprüft und klassifiziert. Die Fließfähigkeit der Formmassen wurde durch Spritzen von Fließspiralen ermittelt. Die Länge des Fließweges ist ein Maß für die Fließfähigkeit unter Spritzgussbedingungen.

Die Korrosion wurde mit Hilfe der Plättchenmethode untersucht. Die am DKI (Deutsches Kunststoffinstitut, Darmstadt) entwickelte Plättchenmethode dient den Modelluntersuchungen zur vergleichenden Bewertung metallischer Werkstoffe bzw. der Korrosions- und Verschleißintensität plastifizierender Formmassen. Bei dieser Prüfung werden zwei Probekörper paarweise in der Düse angeordnet, so dass sie einen rechteckigen Spalt von 12 mm Länge, 10 mm Breite und einer Höhe von 0,1 bis maximal 1 mm verstellbaren Höhe für den Durchtritt der Kunststoffschmelze bilden. Durch diesen Spalt wird Kunststoffschmelze aus einem Plastifizieraggregat extrudiert (oder gespritzt) unter Auftritt großer lokaler Schubspannungen und Schergeschwindigkeiten im Spalt (Günther Mennig, Markus Lake "Verschleißminderung in der Kunststoffverarbeitung - Phänomene und Schutzmaßnahmen" 2. Auflage Carl Hanser Verlag, München 2008, Seiten 281-284; Eggering, P. et. al.: "Verschleiß an Metalloberflächen, die mit schnell strömenden Kunststoffschmelzen in Berührung stehen" Kunststofftechnik 10 (1971) 5, Seiten 159-168).

Eine Verschleißmessgröße ist der Gewichtsverlust der Probekörper, der durch Differenzwägung der Probekörper mit einer A&D "Electronic Balance" Analysenwaage mit einer Abweichung von 0,1 mg bestimmt wird. Die Massenbestimmung der Probekörper erfolgte vor und nach der Korrosionsprüfung mit je 25 oder 50 kg Polymerdurchsatz.

Nach einem vorher definierten Durchsatz (i. d. R. 25 oder 50 kg) werden die Probeplättchen ausgebaut und physikalisch/chemisch von dem anhaftenden Kunststoff gereinigt. Die physikalische Reinigung erfolgt durch Entfernen der heißen Kunststoffmasse durch Abreiben mit einem weichen Material (Baumwolle). Die chemische Reinigung erfolgt durch 20-minütiges Erhitzen der Probekörper auf 60 °C in m-Kresol. Nach dem Auskochen noch anhaftende Kunststoffmasse wird durch Abreiben mit einem weichen Baumwolltupfer entfernt.

Sämtliche Versuche der jeweiligen Serie wurden, falls keine anderen Angaben gemacht wurden, aufgrund der Vergleichbarkeit unter identischen Bedingungen (Temperaturprogramme, Schneckengeometrien, Spritzgießparameter, etc.), durchgeführt. Soweit nicht anders Angegeben, handelt es sich bei Mengenangaben immer um Gew.-%.

Die Tabelle 1 zeigt, dass mit DEPAL in teilaromatischem Polyamid in 15 % Dosierung ein V-0 erreicht wird, aber deutliche Korrosion auftritt, sowohl glasfaserverstärkt als auch unverstärkt. Es wurde nun überraschend gefunden, dass wenn DEPAL partiell durch DEPZN ersetzt wird die Korrosion deutlich geringer wird unter gleichzeitiger Verbesserung der Fließfähigkeit. Der Zusatz von Natriumphosphit, Zinkstannat, Zinkcarbonat, Natriummontanat oder Aluminiumstearat oder eine Kombination aus Zinkcarbonat und Natriummontanat führt ebenfalls überraschend zu einer Verringerung der Korrosion.

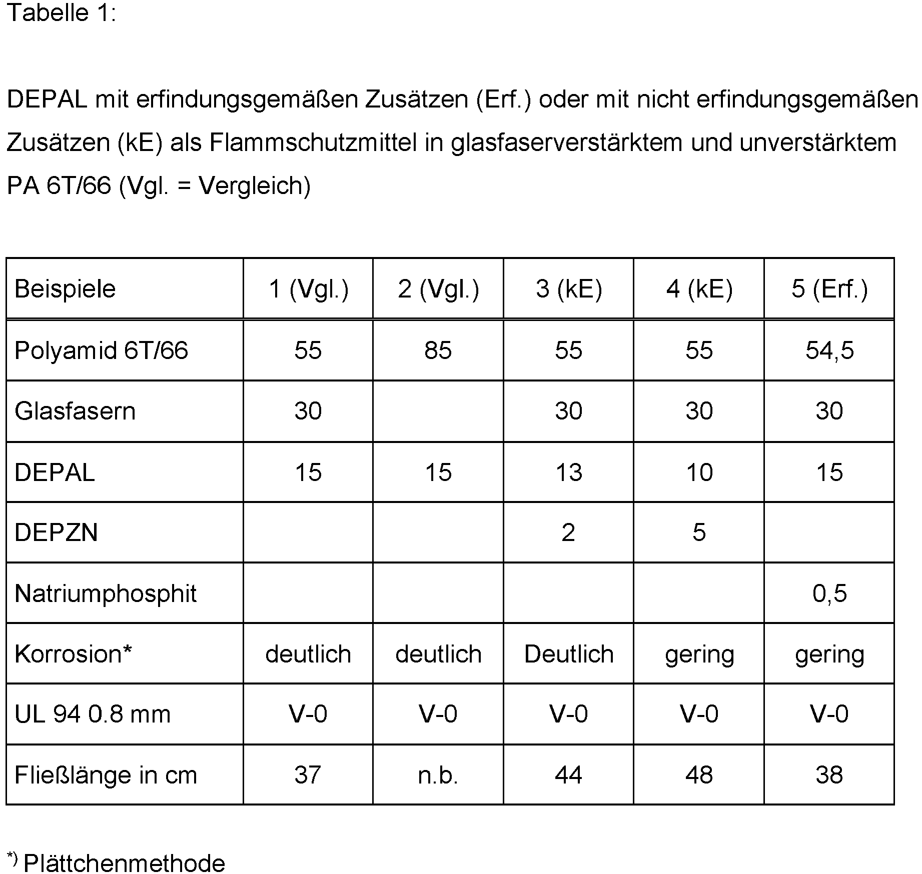

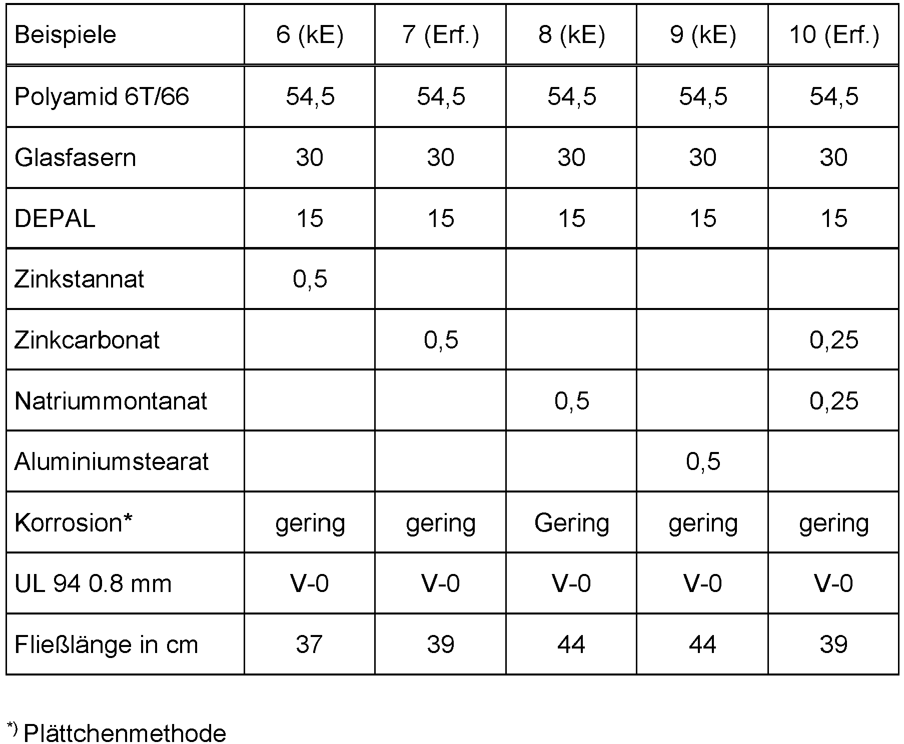

Die Tabelle 2 zeigt, dass Böhmit und Zinkborat synergistische Wirkung zu DEPAL haben, eine verringerte Korrosion bei gleichzeitiger V-0 Einstufung und verbesserter Fließfähigkeit ist auch hier durch die Kombination von DEPAL und DEPZN zu erreichen.

**Tabelle 2:**

| DEPAL und DEPZN mit Zinkborat und Böhmit als Synergist in glasfaserverstärktem PA 6T/66 | | | | | |
|---|---|---|---|---|---|
| Beispiele | 11 (Vgl.) | 12 (Vgl.) | 13 (kE) | 14 (kE) | 15 (kE) |
| Polyamid 6T/66 | 55 | 55 | 55 | 55 | 55 |
| Glasfasern | 30 | 30 | 30 | 30 | 30 |
| DEPAL | 13 | 13 | 11 | 11 | 10 |
| DEPZN | | | 2 | 2 | 3 |
| Zinkborat | 2 | | 2 | | |
| Böhmit | | 2 | | 2 | 2 |
| Korrosion | deutlich | deutlich | Gering | gering | gering |
| UL 94 0.8 mm | V-0 | V-0 | V-0 | V-0 | V-0 |
| Fließlänge in cm | 37 | 38 | 44 | 45 | 47 |

**Tabelle 3:**

| DEPAL und DEPZN mit Melamincyanurat und -polyphosphat in glasfaserverstärktem PBT | | | | | |
|---|---|---|---|---|---|
| Beispiele | 16 (Vgl.) | 17 (Vgl.) | 18 (Vgl.) | 19 (kE) | 20 (Vgl.) |
| PBT | 57 | 57 | 57 | 55 | 55 |
| Glasfasern | 25 | 25 | 25 | 30 | 30 |
| DEPAL | 12 | 12 | 18 | 8 | |
| DEPZN | | | | 4 | 12 |
| Melamincyanurat | 6 | | | 6 | |
| Melam inpolyphosphat | | 6 | | | 6 |
| Korrosion | deutlich | deutlich | Deutlich | gering | gering |
| UL 94 0.8 mm | V-0 | V-0 | V-0 | V-0 | V-1 |
| Fließlänge in cm | 37 | 35 | 36 | 47 | 50 |

Die Tabelle 3 zeigt dass in PBT GF mit DEPAL zwar V-0 bestanden wird, die Fließfähigkeit ist aber schlecht und Korrosion beobachtet wird. Durch die Kombination von DEPAL mit DEPZN wird eine verringerte Korrosion sowie verbesserte Fließfähigkeit bei gleichzeitiger V-0 Einstufung erreicht. Mit DEPZN allein wird kein V-0 erreicht.

**Tabelle 4:**

| DEPAL mit erfindungsgemäßen Zusätzen (Erf.) oder mit nicht erfindungsgemäßen Zusätzen (kE) als Flammschutzmittel in glasfaserverstärktem und unverstärktem PBT | | | | | |
|---|---|---|---|---|---|
| Beispiele | 21 (kE) | 22 (kE) | 23 (Erf.) | 24 (Erf.) | 25 (Erf.) |
| PBT | 56,5 | 56,5 | 56,5 | 81,5 | 56,5 |
| Glasfasern | 25 | 25 | 25 | | 25 |
| DEPAL | 18 | 12 | 12 | 18 | 12 |
| Melamincyanurat | | 6 | 6 | | 6 |
| Aluminiumstearat | 0,5 | | | | |
| Natriummontanat | | 0,5 | | | 0,25 |
| Natriumphosphit | | | 0,5 | | 0,25 |
| Bariumsulfat | | | | 0,5 | |
| Korrosion | gering | gering | gering | gering | gering |
| UL 94 0.8 mm | V-0 | V-0 | V-0 | V-0 | V-0 |
| Fließlänge in cm | 40 | 42 | 37 | n.b. | 50 |

Die Tabelle 4 zeigt, dass durch die Kombination von DEPAL bzw. DEPAL und Melamincynurat (Komponente C) mit Aluminiumstearat, Natriummontanat, Natriumphosphit oder Bariumsulfat (Komponente B) die Fließfähigkeit verbessert wird, die UL 94 V-0 Einstufung erhalten bleibt und die Korrosion überraschenderweise nur gering ist.

### Weiterhin verwendete Materialien:

- Hydrotalcite:
   DHT-4A-2 Fa. Mitsui Chemicals, Japan
   Sorbacid 911, Fa. Südchemie, D
   Puralox MG63 HT, Fa. Sasol, D
   Alcamizer P, Kisuma Chemicals, NL
- Natriumcarbonat. Fa. Sigma-Aldrich, D
- Zinkborophosphat Storflam ZPB, Fa. Joseph Storey, UK

**Tabelle 5:**

| DEPAL mit nicht erfindungsgemäßen Zusätzen (kE) als Flammschutzmittel in glasfaserverstärktem PA 6T/66 (Vgl. = Vergleich) | | | | | |
|---|---|---|---|---|---|
| Beispiele | 25 (kE) | 26 (kE) | 27 (kE) | 28 (kE) | 29 (Vgl.) |
| Polyamid 6T/66 | 54,5 | 54,5 | 54,5 | 54,5 | 54,5 |
| Glasfasern | 30 | 30 | 30 | 30 | 30 |
| DEPAL | 15 | 15 | 15 | 15 | 15 |
| Hydrotalcit | 0,5 | | | 1,0 | |
| Zinkborophosphat | | 0,5 | | | |
| Natriumcarbonat | | | 0,5 | | |
| Korrosion* | gering | gering | gering | keine | deutlich |
| UL 94 0.8 mm | V-0 | V-0 | V-0 | V-0 | V-0 |

| | | | | | |
|---|---|---|---|---|---|
| *) Plättchenmethode | | | | | |

## Patentansprüche

1. Verfahren zur Herstellung flammwidriger, nicht korrosiver, gut fließfähiger Polyamide und Polyester, **dadurch gekennzeichnet, dass** eine Flammschutzmittelmischung aus einem Phosphinsäuresalz der Formel (I) mit M = Al, Mg, Ca, Ti, Zn oder Na (Komponente A) 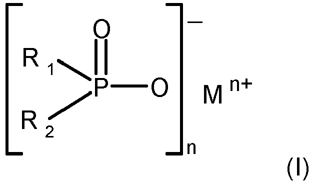 worin
R¹, R² gleich oder verschieden sind und C₁-C₆-Alkyl, linear oder verzweigt und/oder Aryl;
n 1 bis 3;
bedeuten, und als Komponente B Natriumphosphit, Bariumsulfat und/oder Zinkcarbonat eingesetzt wird, wobei Komponente A in 70 - 99,5 Gew.-% und Komponente B in 0,5 - 30 Gew.-% in der Flammschutzmittelmischung enthalten ist.

2. Verfahren nach Anspruch 1, **dadurch gekennzeichnet, dass** Komponente A in 95 - 99,5 Gew.-% und die Komponente B in 0,5 - 5 Gew.-% enthalten sind.

3. Verfahren nach einem der Ansprüche 1 bis 2, **dadurch gekennzeichnet, dass** R¹, R² gleich oder verschieden sind und Methyl, Ethyl, n-Propyl, iso-Propyl, n-Butyl, tert.-Butyl, n-Pentyl und/oder Phenyl bedeuten.

4. Verfahren nach einem oder mehreren der Ansprüche 1 bis 3, **dadurch gekennzeichnet, dass** es sich bei den Polyamiden um aliphatische oder teilaromatische Polyamide handelt.

5. Verfahren nach einem oder mehreren der Ansprüche 1 bis 4, **dadurch gekennzeichnet, dass** es sich um Polyamide handelt, die als aromatische Diamine Phenylendiamine oder Xylylendiamine enthalten.

6. Verfahren nach einem oder mehreren der Ansprüche 1 bis 5, **dadurch gekennzeichnet, dass** es sich um Polyamide handelt, die als aromatische Dicarbonsäuren Terephthalsäure oder Isophthalsäure enthalten.

7. Verfahren nach einem oder mehreren der Ansprüche 1 bis 6, **dadurch gekennzeichnet, dass** als weitere Komponente C eine Stickstoff-, Phosphor- oder Phosphorstickstoffverbindung eingebracht wird.

8. Verfahren zur Herstellung flammwidriger, nicht korrosiver, gut fließfähiger Polyamide und Polyester nach Anspruch 7, **dadurch gekennzeichnet, dass** es sich bei der Komponente C um Melaminphosphat, Dimelaminphosphat, Melaminpyrophosphat, Melaminpoly-phosphate, Melampolyphosphate, Melempolyphosphate und/oder Melonpoly-phosphate und/oder um Melaminkondensationsprodukte wie Melam, Melem und/oder Melon handelt.

9. Verfahren zur Herstellung flammwidriger, nicht korrosiver, gut fließfähiger Polyamide und Polyester nach Anspruch 7 oder 8, **dadurch gekennzeichnet, dass** es sich bei der Komponente C um oligomere Ester des Tris(hydroxyethyl)isocyanurats mit aromatischen Polycarbonsäuren, Benzoguanamin, Tris(hydroxyethyl)isocyanurat, Allantoin, Glycouril, Melamin, Melamincyanurat, Dicyandiamid, Guanidin und/oder Carbodiimide handelt.

10. Verfahren zur Herstellung flammwidriger, nicht korrosiver, gut fließfähiger Polyamide und Polyester nach einem oder mehreren der Ansprüche 1 bis 9, **dadurch gekennzeichnet, dass** es sich bei den Polyestern um Polyethylenterephthalat oder Polybutylenterephthalat handelt.

11. Verfahren zur Herstellung flammwidriger, nicht korrosiver, gut fließfähiger Polyamide und Polyester und auch Formmassen daraus nach einem oder mehreren der Ansprüche 1 bis 10, **dadurch gekennzeichnet, dass** die flammhemmenden Komponenten A und B sowie gegebenenfalls C in die Polyamide eingearbeitet werden, indem alle Bestandteile als Pulver und/oder Granulat in einem Mischer vorgemischt und anschließend in einem Compoundieraggregat in der Polymerschmelze homogenisiert werden und danach die erhaltenen Schmelze als Strang abgezogen, gekühlt und granuliert wird.

12. Verfahren zur Herstellung flammwidriger, nicht korrosiver, gut fließfähiger Polyamide und Polyester und auch Formmassen daraus nach einem oder mehreren der Ansprüche 1 bis 10, **dadurch gekennzeichnet, dass** die flammhemmenden Komponenten A und B sowie gegebenenfalls C in die Polyamide eingearbeitet werden, indem alle Bestandteile als Pulver und/oder Granulat jeweils separat über eine Dosieranlage direkt in das Compoundieraggregat eingebracht werden.

13. Verfahren zur Herstellung flammwidriger, nicht korrosiver, gut fließfähiger Polyamide und Polyester und auch Formmassen daraus nach einem oder mehreren der Ansprüche 1 bis 10, **dadurch gekennzeichnet, dass** die flammhemmenden Komponenten A und B sowie gegebenenfalls C in die Polyamide eingearbeitet werden, indem alle Bestandteile einem fertigen Polymergranulat bzw. -pulver beigemischt werden und die Mischung direkt auf einer Spritzgussmaschine zu Formteilen zu verarbeitet wird.

14. Verfahren zur Herstellung flammwidriger, nicht korrosiver, gut fließfähiger Polyamide und Polyester und auch Formmassen daraus nach einem oder mehreren der Ansprüche 1 bis 13, **dadurch gekennzeichnet, dass** die Polymere 5-60 Gew.-% an faser- oder teilchenförmigen Füllstoffen oder deren Mischungen enthalten

15. Verwendung von Flammschutzmittelmischungen aus mindestens einem Phosphinsäuresalz der Formel (I) mit M = Al, Mg, Ca, Ti, Zn, Na (Komponente A) 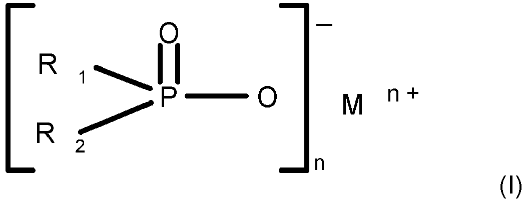 worin
R¹, R² gleich oder verschieden sind und C₁-C₆-Alkyl, linear oder verzweigt und/oder Aryl;
n 1 bis 3;
bedeuten und mindestens einer Komponente B, wobei es sich dabei um Natriumphosphit, Bariumsulfat und/oder Zinkcarbonat handelt und wobei Komponente A in 70 - 99,5 Gew.-% und Komponente B in 0,5 - 30 Gew.-% in der Flammschutzmittelmischung enthalten ist, zur Inhibierung der Korrosion bei der Herstellung von Polyamiden und Polyestern.

16. Verwendung nach Anspruch 15, **dadurch gekennzeichnet, dass** es sich hierbei um gut fließfähige Polyamide und Polyester handelt.

17. Verwendung nach Anspruch 15 oder 16, **dadurch gekennzeichnet, dass** die Korrosion von Metallteilen der Plastifiziereinheit und/oder der Düse beim Compoundieren bzw. Spritzgießen von Polyester und/oder Polyamiden und/oder Compounds davon inhibiert wird.

18. Nichtkorrosive Polyamid- und Polyester-Formmassen enthaltend 0,05 bis 30 Gew.-% einer Flammschutzmittelmischung aus einem Phosphinsäuresalz der Formel (I) mit M = Al, Mg, Ca, Ti, Zn, Na (Komponente A). 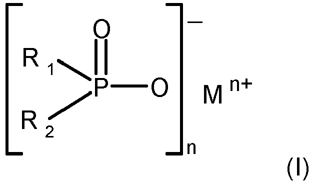 worin
R¹, R² gleich oder verschieden sind und C₁-C₆-Alkyl, linear oder verzweigt und/oder Aryl;
n 1 bis 3;
bedeuten, und als Komponente B ein Natriumphosphit, Bariumsulfat und/oder Zinkcarbonat, wobei Komponente A in 70 - 99,5 Gew.-% und Komponente B in 0,5 - 30 Gew.-% in der Flammschutzmittelmischung enthalten ist und 99,95 bis 70 Gew.-% Polyamid- und/oder Polyester.

## Claims

1. Process for producing flame-retardant, non-corrosive, highly flowable polyamides and polyesters, **characterized in that** a flame retardant mixture made of a phosphinic salt of the formula (I), where M = Al, Mg, Ca, Ti, Zn or Na (component A) 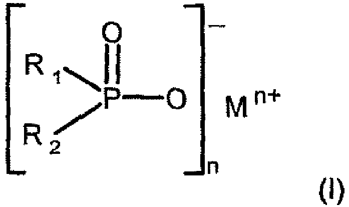 in which
R¹ and R² are identical or different and are C₁-C₆-alkyl, linear or branched, and/or aryl;
n is from 1 to 3;
and, as component B, sodium phosphite, barium sulfate and/or zinc carbonate are used, where the amount of component A present in the flame retardant mixture is from 70 to 99.5% by weight and the amount of component B present in the flame retardant mixture is from 0.5 to 30% by weight.

2. Process according to Claim 1, **characterized in that** the amount of component A present is from 95 to 99.5% by weight and the amount of component B present is from 0.5 to 5% by weight.

3. Process according to either of Claims 1 and 2, **characterized in that** R¹ and R² are identical or different and are methyl, ethyl, n-propyl, isopropyl, n-butyl, tert-butyl, n-pentyl and/or phenyl.

4. Process according to one or more of Claims 1 to 3, **characterized in that** the polyamides are aliphatic or semiaromatic polyamides.

5. Process according to one or more of Claims 1 to 4, **characterized in that** the polyamides contain, as aromatic diamines, phenylenediamines or xylylenediamines.

6. Process according to one or more of Claims 1 to 5, **characterized in that** the polyamides contain, as aromatic dicarboxylic acids, terephthalic acid or isophthalic acid.

7. Process according to one or more of Claims 1 to 6, **characterized in that**, as further component C, a nitrogen, phosphorus or phosphorus-nitrogen compound is introduced.

8. Process for producing flame-retardant, non-corrosive, highly flowable polyamides and polyesters according to Claim 7, **characterized in that** component C is melamine phosphate, dimelamine phosphate, melamine pyrophosphate, melamine polyphosphates, melam polyphosphates, melem polyphosphates and/or melon polyphosphates and/or melamine condensates, such as melam, melem, and/or melon.

9. Process for producing flame-retardant, non-corrosive, highly flowable polyamides and polyesters according to Claim 7 or 8, **characterized in that** component C is oligomeric esters of tris(hydroxyethyl) isocyanurate with aromatic polycarboxylic acids, benzoguanamine, tris(hydroxyethyl) isocyanurate, allantoin, glycoluril, melamine, melamine cyanurate, dicyandiamide, guanidine and/or carbodiimides.

10. Process for producing flame-retardant, non-corrosive, highly flowable polyamides and polyesters according to one or more of Claims 1 to 9, **characterized in that** the polyesters are polyethylene terephthalate or polybutylene terephthalate.

11. Process for producing flame-retardant, non-corrosive, highly flowable polyamides and polyesters and also molding compositions therefrom according to one or more of Claims 1 to 10, **characterized in that** the flame-retardant components A and B, and also, if appropriate, C are incorporated into the polyamides by premixing all of the constituents in the form of powders and/or pellets in a mixer and then homogenizing the same in the polymer melt in a compounding assembly, and then drawing off the resultant melt in the form of a strand, and cooling and pelletizing the same.

12. Process for producing flame-retardant, non-corrosive, highly flowable polyamides and polyesters and also molding compositions therefrom according to one or more of Claims 1 to 10, **characterized in that** the flame-retardant components A and B, and also, if appropriate, C are incorporated into the polyamides by introducing all of the constituents directly in the form of powders and/or pellets respectively separately by way of a metering system into the compounding assembly.

13. Process for producing flame-retardant, non-corrosive, highly flowable polyamides and polyesters and also molding compositions therefrom according to one or more of Claims 1 to 10, **characterized in that** the flame-retardant components A and B, and also, if appropriate, C are incorporated into the polyamides by admixing all of the constituents with finished polymer pellets or with finished polymer powder, and processing the mixture directly in an injection-molding machine to give moldings.

14. Process for producing flame-retardant, non-corrosive, highly flowable polyamides and polyesters and also molding compositions therefrom according to one or more of Claims 1 to 13, **characterized in that** the polymers comprise from 5 to 60% by weight of fibrous or particulate fillers, or a mixture of these.

15. Use of flame retardant mixtures made of at least one phosphinic salt of the formula (I), where M = Al, Mg, Ca, Ti, Zn or Na (component A) 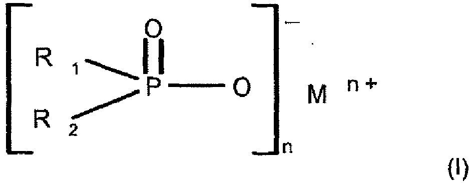 in which
R¹ and R² are identical or different and are C₁-C₆-alkyl, linear or branched, and/or aryl;
n is from 1 to 3;
and of at least one component B, which is sodium phosphite, barium sulfate and/or zinc carbonate, where the amount of component A present in the flame retardant mixture is from 70 to 99.5% by weight and the amount of component B present in the flame retardant mixture is from 0.5 to 30% by weight, for inhibiting corrosion in the production of polyamides and polyesters.

16. Use according to Claim 15, **characterized in that** the polyamides and polyesters are highly flowable.

17. Use according to Claim 15 or 16, **characterized in that** the corrosion of metal parts of the plastifying unit and/or of the die is inhibited during the compounding or injection-molding of polyester and/or polyamides and/or of materials compounded therefrom.

18. Non-corrosive molding compositions composed of polyamide or of polyester and comprising from 0.05 to 30% by weight of a flame retardant mixture made of a phosphinic salt of the formula (I), where M = Al, Mg, Ca, Ti, Zn, or Na (component A) 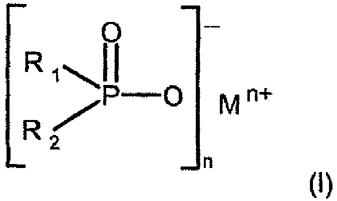 in which
R¹ and R² are identical or different and are C₁-C₆-alkyl, linear or branched, and/or aryl;
n is from 1 to 3;
and, as component B, a sodium phosphite, barium sulfate and/or zinc carbonate, where the amount of component A present in the flame retardant mixture is from 70 to 99.5% by weight and the amount of component B present in the flame retardant mixture is from 0.5 to 30% by weight, with from 99.95 to 70% by weight of polyamide and/or polyester.

## Revendications

1. Procédé de fabrication de polyamides et de polyesters retardateurs de combustion, non corrosifs, présentant une bonne fluidité, **caractérisé en ce qu'**on utilise un mélange d'agents d'ignifugation constitué d'un sel de l'acide phosphinique de formule (I), avec M = Al, Mg, Ca, Ti, Zn ou Na (composant A) 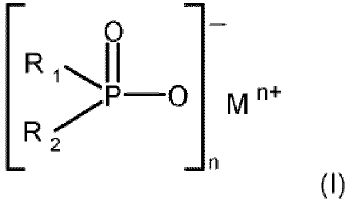 dans laquelle
R¹, R² sont identiques ou différents et représentent un alkyle en C₁-C₆, linéaire ou ramifié, et/ou un aryle ;
n représente 1 à 3 ;
et en tant que composant B du phosphite de sodium, du sulfate de baryum et/ou du carbonate de zinc, le mélange d'agents d'ignifugation contenant le composant A à raison de 70 à 99,5 % en poids et le composant B à raison de 0,5 à 30 % en poids.

2. Procédé selon la revendication 1, **caractérisé en ce que** le composant A est présent en une quantité de 95 à 99,5 % en poids et le composant B en une quantité de 0,5 à 5 % en poids.

3. Procédé selon l'une des revendications 1 à 2, **caractérisé en ce que** R¹, R² sont identiques ou différents et représentent un méthyle, un éthyle, un n-propyle, un iso-propyle, un n-butyle, un tert-butyle, un n-pentyle et/ou un phényle.

4. Procédé selon l'une ou plusieurs des revendications 1 à 3, **caractérisé en ce que**, pour ce qui concerne les polyamides, il s'agit de polyamides aliphatiques ou partiellement aromatiques.

5. Procédé selon l'une ou plusieurs des revendications 1 à 4, **caractérisé en ce qu'**il s'agit de polyamides qui, en tant que diamines aromatiques, contiennent des phénylènediamines ou des xylylènediamines.

6. Procédé selon l'une ou plusieurs des revendications 1 à 5, **caractérisé en ce qu'**il s'agit de polyamides qui, en tant qu'acides dicarboxyliques aromatiques, contiennent de l'acide téréphtalique ou de l'acide isophtalique.

7. Procédé selon l'une ou plusieurs des revendications 1 à 6, **caractérisé en ce qu'**on incorpore en tant que composant supplémentaire C un composé azoté, phosphoré ou phosphoré/azoté.

8. Procédé de fabrication de polyamides et de polyesters retardateurs de combustion, non corrosifs, présentant une bonne fluidité, selon la revendication 7, **caractérisé en ce que**, pour ce qui concerne le composant C, il s'agit de phosphate de mélamine, de phosphate de dimélamine, de pyrophosphate de mélamine, de polyphosphate de mélamine, de polyphosphate de mélam, de polyphosphate de mélem et/ou de polyphosphates de mélon et/ou de produits de condensation de la mélamine tels que le mélam, le mélem et/ou le mélon.

9. Procédé de fabrication de polyamides et de polyesters retardateurs de combustion, non corrosifs, présentant une bonne fluidité selon la revendication 7 ou 8, **caractérisé en ce que**, pour ce qui concerne le composant C, il s'agit d'esters oligomères de l'isocyanurate de tris(hydroxyéthyle) et d'acides polycarboxyliques aromatiques, de la benzoguanamine, de l'isocyanurate de tris(hydroxyéthyle), de l'allantoïne, du glycourile, de la mélamine, du cyanurate de mélamine, du dicyanodiamide, de la guanidine et/ou des carbodiimides.

10. Procédé de fabrication de polyamides et de polyesters retardateurs de combustion, non corrosifs, présentant une bonne fluidité, selon l'une ou plusieurs des revendications 1 à 9, **caractérisé en ce que**, pour ce qui concerne les polyesters, il s'agit de poly(téréphtalate d'éthylène) ou de poly(téréphtalate de butylène).

11. Procédé de fabrication de polyamides et de polyesters retardateurs de combustion, non corrosifs, présentant une bonne fluidité, et aussi de mélanges à mouler obtenus à partir d'eux, selon l'une ou plusieurs des revendications 1 à 10, **caractérisé en ce que** les composants ininflammables A et B, ainsi qu'éventuellement C, sont incorporés dans les polyamides, dans lequel tous les constituants sont pré-mélangés sous forme d'une poudre et/ou d'un granulat dans un mélangeur, puis sont homogénéisés dans un équipement de compoundage dans la masse fondue de polymères, puis la masse fondue obtenue est extrudée sous forme d'un boudin, refroidie et granulée.

12. Procédé de fabrication de polyamides et de polyesters retardateurs de combustion, non corrosifs, présentant une bonne fluidité, et aussi de mélanges à mouler obtenus à partir d'eux, selon l'une ou plusieurs des revendications 1 à 10, **caractérisé en ce que** les composants ininflammables A et B, ainsi qu'éventuellement C, sont incorporés dans les polyamides, dans lequel tous les constituants sont introduits sous forme d'une poudre et/ou d'un granulat, chacun séparément par l'intermédiaire d'un dispositif doseur, directement dans l'équipement de compoundage.

13. Procédé de fabrication de polyamides et de polyesters retardateurs de combustion, non corrosifs, présentant une bonne fluidité, et aussi de mélanges à mouler obtenus à partir d'eux, selon l'une ou plusieurs des revendications 1 à 10, **caractérisé en ce que** les composants ininflammables A et B, ainsi qu'éventuellement C, sont incorporés dans les polyamides, dans lequel tous les constituants sont mélangés à un granulat ou une poudre de polymères finie, et le mélange est mis en œuvre directement sur une machine à mouler par extrusion, pour donner des pièces moulées.

14. Procédé de fabrication de polyamides et de polyesters retardateurs de flamme, non corrosifs, présentant une bonne fluidité, et aussi de mélanges à mouler obtenus à partir d'eux, selon l'une ou plusieurs des revendications 1 à 13, **caractérisé en ce que** les polymères contiennent 5 à 60 % en poids de charges fibreuses ou particulaires, ou de leurs mélanges.

15. Utilisation de mélanges d'agents d'ignifugation constitués d'au moins un sel de l'acide phosphinique de formule (I) avec M = Al, Mg, Ca, Ti, Zn, Na (composant A) 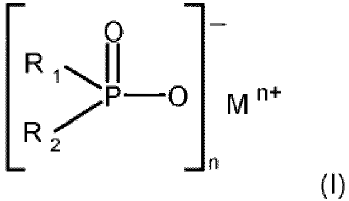 dans laquelle
R¹, R² sont identiques ou différents et représentent un alkyle en C₁-C₆, linéaire ou ramifié, et/ou aryle ;
n représente 1 à 3 ;
et au moins un composant B, dans laquelle il s'agit alors de phosphite de sodium, de sulfate de baryum et/ou de carbonate de zinc, et le mélange d'agents d'ignifugation contenant le composant A à raison de 70 à 99,5 % en poids et le composant B à raison de 0,5 à 30 % en poids, pour inhiber la corrosion lors de la fabrication de polyamides et de polyesters.

16. Utilisation selon la revendication 15, **caractérisée en ce qu'**il s'agit alors de polyamides et de polyesters ayant une bonne fluidité.

17. Utilisation selon la revendication 15 ou 16, **caractérisée en ce que** la corrosion de pièces métalliques de l'unité de plastification et/ou de la buse est inhibée lors du compoundage ou du moulage par injection de polyesters et/ou de polyamides et/ou de mélanges de ceux-ci.

18. Mélanges à mouler de polyamides et de polyesters non corrosifs contenant 0,05 à 30 % en poids d'un mélange d'agents d'ignifugation, constitué d'un sel de l'acide phosphinique de formule (I) avec M = Al, Mg, Ca, Ti, Zn, Na (composant A) 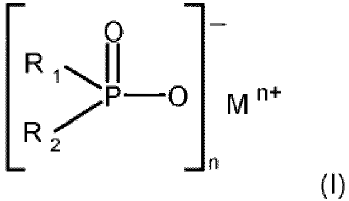 dans laquelle
R¹, R² sont identiques ou différents et représentent un alkyle en C₁-C₆, linéaire ou ramifié, et/ou aryle ;
n représente 1 à 3 ;
et, en tant que composant B, un phosphite de sodium, un sulfate de baryum et/ou un carbonate de zinc, le mélange d'agents d'ignifugation contenant le composant A à raison de 70 à 99,5 % en poids et le composant B à raison de 0,5 à 30 % en poids, et 99,95 à 70 % en poids de polyamides et/ou de polyesters.
